(19) Europäisches Patentamt / European Patent Office / Office européen des brevets

(11) **EP 3 026 864 B1**

(12) **EUROPEAN PATENT SPECIFICATION**

(45) Date of publication and mention
of the grant of the patent:
**26.09.2018 Bulletin 2018/39**

(51) Int Cl.:
**H04L 29/06** *(2006.01)* **G06F 21/55** *(2013.01)*

(21) Application number: **15196035.8**

(22) Date of filing: **24.11.2015**

(54) **METHOD AND DEVICE FOR IDENTIFYING BOT ACCESS**

VERFAHREN UND VORRICHTUNG ZUR IDENTIFIKATION ZUGANG EINES BOTS

PROCÉDÉ ET DISPOSITIF POUR IDENTIFIER L'ACCESS PAR UN BOT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.11.2014 CN 201410708281**

(43) Date of publication of application:
**01.06.2016 Bulletin 2016/22**

(73) Proprietor: **Xiaomi Inc.
Beijing 100085 (CN)**

(72) Inventors:
• **ZHANG, Hua
BEIJING 100085 (CN)**
• **XIA, Yi
BEIJING 100085 (CN)**
• **HONG, Dingkun
BEIJING 100085 (CN)**
• **WANG, Haizhou
BEIJING 100085 (CN)**

(74) Representative: **Underwood, Nicolas Patrick et al
Cabinet Beau de Loménie
158, rue de l'Université
75340 Paris Cedex 07 (FR)**

(56) References cited:
**CN-A- 104 113 519        US-A1- 2010 192 201
US-A1- 2013 291 107        US-A1- 2014 165 200
US-A1- 2014 304 833**

## Description

## TECHNICAL FIELD

The present disclosure generally relates to the field of communications and computer processing, and more particularly, to a method and device for identifying user behavior.

## BACKGROUND

With the development of Internet, resource sharing may be realized through network. People may acquire more abundant information conveniently and quickly through the Internet. Many websites are confronted with various malicious attacks while people acquire information.

It has been found that in related technologies a malicious attack frequently comprises sending data packets to websites within a relatively short time. Such events often occur in websites frequently visited within a short time during a rush to purchase commodities related to the purchasing of cut-price commodities. Such a high-frequency access behavior generally is achieved by means of software to rush to purchase because such a high-frequency access behavior is unavailable by manual operation. In related technologies some means may prevent such a malicious behavior but the effect is not desirable. Therefore, it is a problem to be solved urgently how to more efficiently identify a user's malicious behavior.

Documents US 2010/192201, CN 104 113 519, US 2013/291107, US 2014/165200, and US 2014/304833 disclose known methods for identifying user behavior.

## SUMMARY

In order to overcome problems in related technologies, the present disclosure provides a method and device for identifying user behavior.

According to a first aspect of the embodiments of the present disclosure, a method for identifying user behavior is provided, including:

acquiring an access behavior of a terminal within a preset time sliding window;
evaluating the access behavior within the time sliding window according to the access behavior within the time sliding window; and
determining whether the access behavior of the terminal is a malicious access according to an evaluation result.

It should be noted that in the present application, the "access behavior of a terminal" is the behavior of a terminal accessing a server by sending an access request, and this "access behavior" can be measured by measuring the number of accesses or access requests. This measuring can be carried out by the server by counting the number of times a client requests access to the server.

The technical solution provided in the embodiments of the present disclosure may achieve the following beneficial effects: in the present embodiment, by means of the time sliding window, a real-time monitoring of user's access behavior is enabled, and the access behavior is evaluated, hereby it is determined whether the user's access behavior is malicious.

In an embodiment, the time sliding window includes $m$ equal time slices;
the step of evaluating the access behavior within the time sliding window according to the access behavior within the time sliding window includes:

judging whether a number of times of accesses for each time slice is beyond a preset threshold value of number of times for slicing, and acquiring $n$ time slices in which the number of times of accesses is beyond the preset threshold value of number of times for slicing;
judging whether a ratio of $n$ to $m$ is beyond a preset first ratio threshold value; and
the step of determining whether the access behavior of the terminal is a malicious access according to an evaluation result includes:
determining the access behavior of the terminal as a malicious access if the ratio of $n$ to $m$ is beyond the preset first ratio threshold value.

The technical solution provided in the embodiments of the present disclosure may achieve the following beneficial effects: in the present embodiment, the access behavior is monitored for each time slice, and it is checked whether the number of times of accesses is continually relative great, hereby it is evaluated whether the access behavior is malicious, thus the evaluation result is more accurate.

In an embodiment, the step of evaluating the access behavior within the time sliding window according to the access behavior within the time sliding window includes:

acquiring a time interval between two adjacent access behaviors for every two adjacent access behaviors within the time sliding window;
calculating a time variance of access behaviors according to time intervals acquired; and
judging whether the time variance is greater than a preset variance threshold value;
the step of determining whether the access behavior of the terminal is a malicious access according to an evaluation result includes:
determining the access behavior of the terminal as a malicious access if the time variance is greater than the preset variance threshold value.

The technical solution provided in the embodiments of the present disclosure may achieve the following beneficial effects: in the present embodiment, a variance calculation is conducted for a time interval to judge whether access behaviors occur at a fixed frequency, if yes, it may be determined that the access behaviors are triggered by software instead of a user. Hereby a malicious behavior may be identified more accurately.

In an embodiment, the step of evaluating the access behavior within the time sliding window according to the access behavior within the time sliding window includes:

acquiring a time interval between two adjacent access behaviors for every two adjacent access behaviors within the time sliding window;
calculating a time variance of access behaviors according to time intervals acquired;
calculating a ratio of the time variance to an average value of the time intervals; and
judging whether the ratio is smaller than a preset second ratio threshold value;
the step of determining whether the access behavior of the terminal is a malicious access according to an evaluation result includes:
determining the access behavior of the terminal as a malicious access if the ratio is smaller than the preset second ratio threshold value.

The technical solution provided in the embodiments of the present disclosure may achieve the following beneficial effects: in the present embodiment, a further comparison may be made between the variance and the average value of time intervals so as to more accurately identify a malicious behavior.

In an embodiment, the step of evaluating the access behavior within the time sliding window according to the access behavior within the time sliding window includes:

acquiring a total number of access behaviors within the time sliding window;
judging whether the total number is beyond a preset total number threshold value; and
evaluating the access behavior within the time sliding window according to a judgment result.

The technical solution provided in the embodiments of the present disclosure may achieve the following beneficial effects: in the present embodiment, a malicious behavior may be more accurately identified through further evaluating an access behavior by using the total number of access behaviors on the basis of the above solution.

According to a second aspect of the embodiments of the present disclosure, a device for identifying user behavior is provided, including:

an acquisition module, configured to acquire an access behavior of a terminal within a preset time sliding window;
an evaluation module, configured to evaluate the access behavior within the time sliding window according to the access behavior within the time sliding window; and
a determination module, configured to determine whether the access behavior of the terminal is a malicious access according to an evaluation result.

In an embodiment, the time sliding window includes $m$ equal time slices;
the evaluation module includes:

a time slice submodule, configured to judge whether a number of times of accesses for each time slice is beyond a preset threshold value of number of times for slicing, and acquiring $n$ time slices in which the number of times of accesses is beyond the preset threshold value of number of times for slicing; and
a first ratio submodule, configured to judge whether a ratio of $n$ to $m$ is beyond a preset first ratio threshold value;
the determination module determines the access behavior of the terminal as a malicious access if the ratio of $n$ to $m$ is beyond the preset first ratio threshold value.

In an embodiment, the evaluation module includes:

an interval submodule, configured to acquire a time interval between two adjacent access behaviors for every two adjacent access behaviors within the time sliding window;
a variance submodule, configured to calculate a time variance of access behaviors according to time intervals acquired; and
a first evaluation submodule, configured to judge whether the time variance is greater than a preset variance threshold value;
the determination module determines the access behavior of the terminal as a malicious access if the time variance is greater than a preset variance threshold value.

In an embodiment, the first evaluation module includes:

an interval submodule, configured to acquire a time interval between two adjacent access behaviors for every two adjacent access behaviors within the time sliding window;
a variance submodule, configured to calculate a time variance of access behaviors according to time intervals acquired;
a ratio submodule, configured to calculate a ratio of the time variance to an average value of the time intervals; and

a second ratio submodule, configured to judge whether the ratio is smaller than a preset second ratio threshold value;

the determination module determines the access behavior of the terminal as a malicious access if the ratio is smaller than a preset second ratio threshold value.

In an embodiment, the evaluation module includes:

a total number submodule, configured to acquire a total number of access behaviors within the time sliding window;

a total number judgment submodule, configured to judge whether the total number is beyond a preset total number threshold value; and

a second evaluation submodule, configured to evaluate the access behavior within the time sliding window according to a judgment result.

According to a third aspect of the embodiments of the present disclosure, a server for identifying user behavior is provided, including:

a processor; and

a memory configured to store instruction executable by the processor;

wherein, the processor is configured to:

acquire an access behavior of a terminal within a preset time sliding window;

evaluate the access behavior within the time sliding window according to the access behavior within the time sliding window; and

determine whether the access behavior of the terminal is a malicious access according to an evaluation result.

According to another aspect of the embodiments of the present disclosure, there is provided a computer program, which when executing on a processor, performs a method according to the first aspect mentioned above.

This program can use any programming language and take the form of source code, object code or a code intermediate between source code and object code, such as a partially compiled form, or any other desirable form.

According to another aspect of the embodiments of the present disclosure, there is provided a recording medium readable by a computer and having recorded thereon a computer program including instructions for executing the steps of a method as defined above.

The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

It is to be understood that both the foregoing general description and the following detailed description are exemplary and explanatory only and are not restrictive of the disclosure.

**BRIEF DESCRIPTION OF THE DRAWINGS**

The accompanying drawings, which are incorporated in and constitute a part of this specification, illustrate embodiments consistent with the disclosure and, together with the description, serve to explain the principles of the disclosure.

Fig. 1 is a flow chart showing a method for identifying user behavior according to an exemplary embodiment.

Fig. 2 is a flow chart showing a method for identifying user behavior according to an exemplary embodiment.

Fig. 3 is a flow chart showing a method for identifying user behavior according to an exemplary embodiment.

Fig. 4 is a block diagram showing a device for identifying user behavior according to an exemplary embodiment.

Fig. 5 is a block diagram showing an evaluation module according to an exemplary embodiment.

Fig. 6A is a block diagram showing an evaluation module according to an exemplary embodiment.

Fig. 6B is a block diagram showing an evaluation module according to an exemplary embodiment.

Fig. 7 is a block diagram showing an evaluation module according to an exemplary embodiment.

Fig. 8 is a block diagram showing a device according to an exemplary embodiment.

**DETAILED DESCRIPTION**

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

In related art, network activities are increasingly frequent, and network merchants often launch promotions for seckilling (instant purchasing) commodities at a reduced price. It should be noted that seckilling is also known as "second kill" or "instant kill" or "flash deal" and means time-limited sales and promotions online. Usually, user visit websites very frequently in a short time to participate in this time limited sale or promotion.

For seckilling commodities at a low price, users may frequently visit websites of merchants within a short time. Some users may use software to rush to purchase. Software for rush to purchase may visit websites of merchants at a higher visit frequency than that of ordinary users. However, an access behavior triggered by software for rush to purchase is a malicious behavior, which may lead to breakdown of a website. One possible solution is as below: it is judged that whether a number of times of accesses within a preset time period is beyond a preset threshold value, and it is determined that a malicious access exists if the number of times of accesses within the preset time period is beyond the preset threshold value. However, this identification method is relatively simple, unable to accurately identify whether the number of times of accesses is resulted from user behavior or triggered by the software for rush to purchase, thus being not accurate enough in identification results.

In order to solve the problem, in the present embodiment, an access behavior of a terminal is monitored by means of a time sliding window, which may enable a relatively accurate identification on whether the access behavior of the terminal is malicious.

The time sliding window in the present embodiment is a dynamic time window, which has a fixed length such as 3,600 seconds. An end point of the time sliding window is always a current time point. Therefore the time sliding window moves as the time changes.

In related art, a solution for detecting the number of times of accesses within a preset time period is as below: if the preset time period is 1,000 seconds, it is detected once within 0~1,000th second and detected once again within 1,001th~2,000th second, and so on. However, it is unable to detect an access behavior occurred within 500th~1,500th second. In the present embodiment, a real-time detection is conducted as the time sliding window moves. For example, if the time sliding window has a length of 1,000 seconds, it is detected once within 0~1,000th second, detected once again within 1st~1,001th second, and detected once again within 2nd~1,002th second, and so on. It is thus clear that compared with the technical solution of related art, the present disclosure may be more accurate in detection and identification of a malicious behavior.

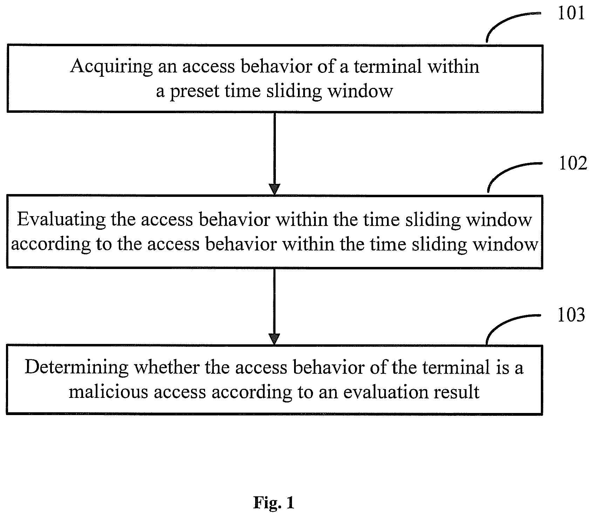

Fig. 1 is a flow chart showing a method for identifying user behavior according to an exemplary embodiment; as shown in Fig. 1, the method may be realized by a server, including following steps:
In Step 101, an access behavior of a terminal within a preset time sliding window is acquired.

In Step 102, the access behavior within the time sliding window is evaluated according to the access behavior within the time sliding window.

In Step 103, it is determined whether the access behavior of the terminal is a malicious access according to an evaluation result.

In the present embodiment, the access behavior of the terminal may be monitored in real time by means of the time sliding window, and it is possible to simultaneously monitor the access behavior within a period of time and evaluate whether the access behavior is malicious, with more accurate identification results. In the present embodiment, the behavior of a single terminal is monitored and evaluated, and the terminal may be determined by means of a user name, an IP (Internet Protocol) address, a MAC (Media Access Control) address or the like.

Various means may be adopted if it is identified that a malicious access exists. For example, it may be required to send a verification code from the terminal, or the access of the user (or the terminal) may be provisionally blocked, or the user may be added into a blacklist so as to block the access of the user forever, or a warning message may be sent to the user, etc.

In an embodiment, Step 102 may be realized as Step A.

In Step A, an access behavior within the time sliding window is evaluated according to the access behavior in each time slice of the time sliding window.

In the present embodiment, the time sliding window may be further subdivided into a plurality of time slices, each of which has a same length (equal). For example, if a time sliding window including ten time slices has a length of 3,600 seconds, each time slice has a length of 360 seconds. In the present embodiment, a user access behavior is monitored by taking the time slice as a unit, with a monitoring granularity being further reduced, which contributes to more accurately identifying a malicious behavior. Furthermore, in the present embodiment, it is evaluated according to both the access behavior in each time slice and the whole access behavior within the time sliding window, with more accurate evaluation results.

In an embodiment, Step A may include Steps A1~A2.

In Step A1, for each time slice, it is judged whether a number of times of accesses in the each time slice is beyond a preset threshold value of number of times for slicing, and acquired $n$ time slices in which the number of times of accesses is beyond the preset threshold value of number of times for slicing; and

in Step A2, it is judged whether a ratio of *n* to *m* is beyond a preset first ratio threshold value.

Step 103 may be realized as Step A3.

In Step A3, the access behavior of the terminal is determined as a malicious access if the ratio of *n* to *m* is beyond the preset first ratio threshold value.

Namely, time slices are determined in which the number of times of accesses is beyond the preset threshold value of number of times for slicing. It is judged that whether the ratio of the number of time slices in which the number of times of accesses is beyond the threshold value of number of times for slicing to a total number of time slices is beyond the preset first ratio threshold value. Access behaviors within the time sliding window are evaluated according to a judgment result.

In the present embodiment, the number of times of accesses is determined as too high and a malicious access exists if the ratio of the number of time slices in which the number of times of accesses is beyond the threshold value of number of times for slicing to the total number of time slices is beyond the preset first ratio threshold value, otherwise it is determined that no malicious access exists.

For example, if a time sliding window including ten time slices t1-t10 has a length of 3,600 seconds, each time slice has a length of 360 seconds. The numbers of times of accesses corresponding to ten time slices are respectively: t1=50, t2=60, t3=52, t4=55, t5=48, t6=56, t7=58, t8=54, t9=56 and t10=57. The threshold value of number of times for slicing is 50. Thus, except the time slice t5, the numbers of times of accesses corresponding to all other nine time slices are beyond the threshold value of number of times for slicing. The ratio of the number of time slices in which the number of times of accesses is beyond the threshold value of number of times for slicing to the total number of time slices is calculated as below: 9/10=90%. Supposing that the first ratio threshold value is 90%, it is determined that a malicious access exists in the time sliding window T by making a comparison between the ratio (90%) of the number of time slices in which the number of times of accesses is beyond the threshold value of number of times for slicing to the total number of time slices and the first ratio threshold value (90%) and by evaluating the access behavior.

In an embodiment, Step 102 may be realized as Solution B.

Solution B:

In Step B1, a time interval between two adjacent access behaviors is acquired for every two adjacent access behaviors within the time sliding window.

In Step B2, a time variance of access behaviors is calculated according to time intervals acquired.

In Step B3, the access behavior within the time sliding window is evaluated according to the time variance. It is judged whether the time variance is greater than a preset variance threshold value.

In Step 103, it is determined the access behavior of the terminal is a malicious access if the time variance is greater than the preset variance threshold value.

In the present embodiment, a comparison is made between the time variance and the preset variance threshold value. The variance is relatively large if it is greater than the preset variance threshold value, which means the fluctuation of the time interval of access behaviors is relatively large. In this case, it may be determined that the access behavior comes out from a user instead of software for rush to purchase, and further it may be determined that there is not a malicious behavior. Otherwise, it may be determined that there is a malicious behavior if the time variance is not greater than the preset variance threshold value.

For example, time intervals (x1, x2, x3,...,xn) between two adjacent access behaviors are acquired for every two adjacent access behaviors in the time sliding window, and $\overline{x}$ is the average value of x1~xn. The variance formula is as below:

$$ s^2 = \frac{1}{n}\left[ \left( x1 - \overline{x} \right)^2 + \left( x2 - \overline{x} \right)^2 + ... \left( xn - \overline{x} \right)^2 \right] $$

wherein s stands for the variance acquired from calculation.

In an embodiment, Solution B may be combined with Steps A1-A3. For example, a variance corresponding to each time slice is calculated so as to determine time slices in which the variance is greater than the variance threshold value and determine the ratio of the number of time slices in which the variance is greater than the variance threshold value to the total number of time slices, and the ratio is further compared with the first ratio threshold value to determine whether there is a malicious access.

In an embodiment, Solution B may be further modified. Step B3 may include Steps B31 and B32.

A time interval between two adjacent access behaviors is acquired for every two adjacent access behaviors within the time sliding window; and a time variance of access behaviors is calculated according to time intervals acquired.

In Step B31, a ratio of the time variance to an average value of the time intervals is calculated.

In Step B32, it is judged whether the ratio is smaller than a preset second ratio threshold value. The access behavior within the time sliding window is evaluated according to a judgment result.

Step 103 may be realized as Step B33.

In Step B33, it is determined that the access behavior of the terminal is a malicious access if the ratio is smaller than the preset second ratio threshold value.

In the present embodiment, if the ratio of the time variance to the average value of the time intervals is beyond the preset second ratio threshold value, it means that the time variance is quite close to the average value of the time intervals. It may be determined that the access behavior is triggered and generated by software for rush to purchase and a malicious access exists. Otherwise, it is determined that the access behavior is triggered and generated by the user and no malicious access exists.

For example, the average value x is 1, and the time variance is 0.5. The ratio of the time variance to the average value is 50%, greater than the preset second ratio threshold value 10%. The variance (0.5) is relatively small, but is relatively large in deviation from the average value (1).

For another example, the average value x is 10, and the time variance is 0.5. The ratio of the time variance to the average value is 5%, smaller than the preset second ratio threshold value 10%. The time variance (0.5) is quite close to the average value as the average value (10) is relatively large.

In the present embodiment, an access behavior may be more accurately evaluated by making a comparison of a degree of closeness between the variance and the average value (also referred to as a degree of deviation from another perspective).

In an embodiment, Step 102 may be realized as Solution C.

Solution C:

In Step C1, a total number of access behaviors within the time sliding window is acquired.

In Step C2, it is judged whether the total number is beyond a preset total number threshold value.

In Step C3, the access behavior within the time sliding window is evaluated according to a judgment result.

In the present embodiment, it may be determined that a PV (page view) is too high and a malicious access exists if the total number of access behaviors within the time sliding window is beyond the total number threshold value. Otherwise, it may be determined that no malicious access exists.

In an embodiment, Solution C may be combined with above Solutions. A judgment according to Solution C is further executed on the basis of judgment results according to Step A and Solution B. A conclusion that a malicious access exists will be not made unless it is determined a malicious access exists according to all judgment results.

The implementation process for identifying user behavior will be introduced in detail by means of following several embodiments.

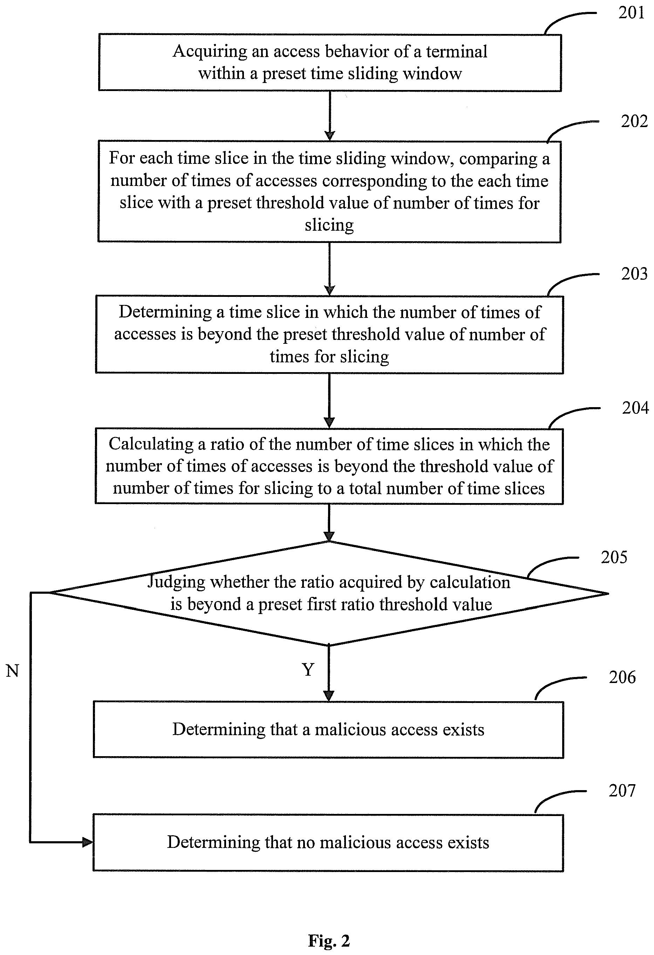

Fig. 2 is a flow chart showing a method for identifying user behavior according to an exemplary embodiment; as shown in Fig. 2, the method may be realized by a server, including following steps.

In Step 201, an access behavior of a terminal within a preset time sliding window is acquired.

In Step 202, for each time slice in the time sliding window, a comparison is made between a number of times of accesses corresponding to the each time slice and a preset threshold value of number of times for slicing.

In Step 203, a time slice, in which the number of times of accesses is beyond the preset threshold value of number of times for slicing, is determined.

In Step 204, a ratio of the number of time slices in which the number of times of accesses is beyond the threshold value of number of times for slicing to the total number of time slices is calculated.

In Step 205, it is judged whether the ratio acquired by calculation is beyond a preset first ratio threshold value. Step 206 is executed if the ratio acquired by calculation is beyond the preset first ratio threshold value, otherwise Step 207 is executed.

In Step 206, it is determined that a malicious access exists.

In Step 207, it is determined that no malicious access exists.

In the present embodiment, the access behavior may be monitored more meticulously by means of time slices. It is possible to more accurately identify whether a malicious access exists by monitoring the number of times of access with a smaller granularity.

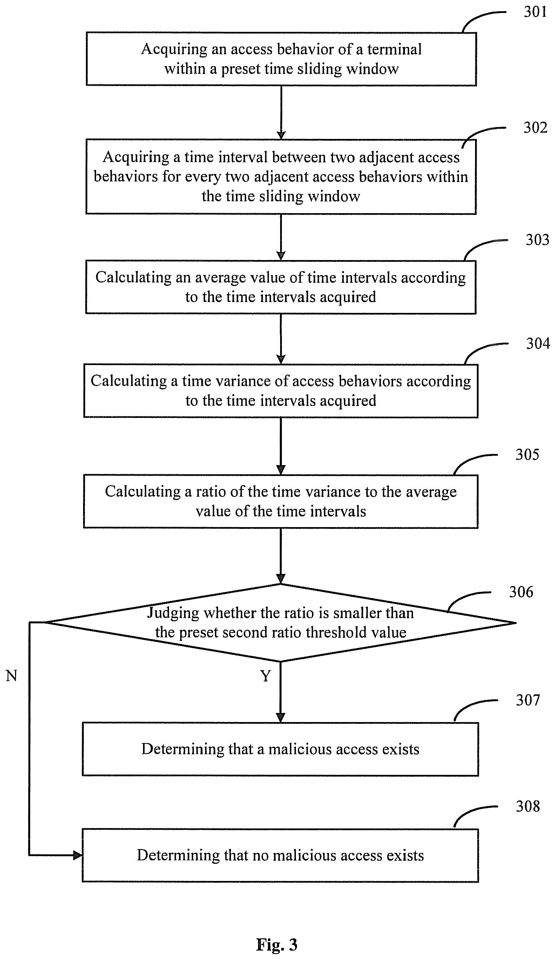

Fig. 3 is a flow chart showing a method for identifying user behavior according to an exemplary embodiment; as shown in Fig. 3, the method may be realized by a server, including following steps.

In Step 301, an access behavior of a terminal within a preset time sliding window is acquired.

In Step 302, a time interval between two adjacent access behaviors is acquired for every two adjacent access behaviors within the time sliding window.

In Step 303, an average value of time intervals is calculated according to the time intervals acquired.

In Step 304, a time variance of access behaviors is calculated according to the time intervals acquired.

In Step 305, a ratio of the time variance to the average value of the time intervals is calculated.

In Step 306, it is judged whether the ratio is smaller than a preset second ratio threshold value. Step 307 is executed if the ratio is smaller than the preset second ratio threshold value, otherwise Step 308 is executed.

In Step 307, it is determined that a malicious access exists.

In Step 308, it is determined that no malicious access exists.

In the present embodiment, it is determined by means of variance that whether access behaviors are acquired evenly in time. It may be determined that the access behaviors are generated by software instead of a user if the access behaviors are acquired evenly in time. Otherwise, it may be determined that no malicious access exists. Hereby a malicious access may be identified more accurately.

The implementation for identification of user behavior is referred to hereinabove, and the implementation may be realized by a server; an internal structure and functions of a device are described hereinafter.

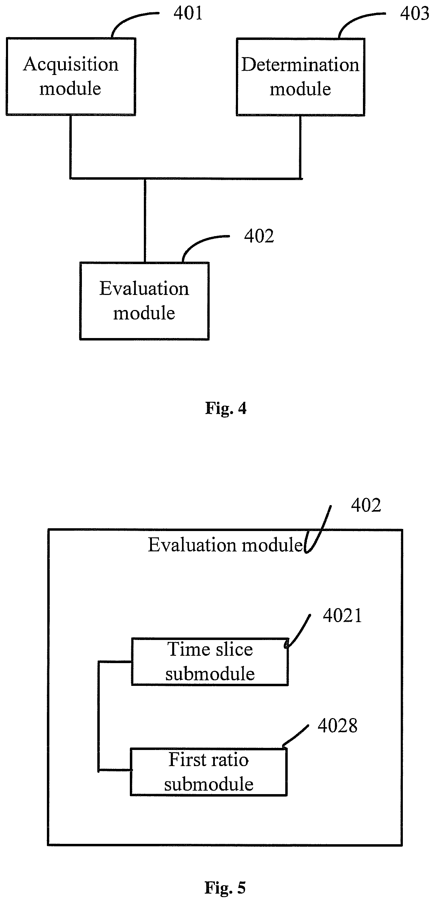

Fig. 4 is a block diagram showing a device for identifying user behavior according to an exemplary embodiment. Referring to Fig. 4, the device includes: an acquisition module 401, an evaluation module 402 and a determination module 403.

The acquisition module 401 is configured to acquire an access behavior of a terminal within a preset time sliding window.

The evaluation module 402 is configured to evaluate the access behavior within the time sliding window according to the access behavior within the time sliding window.

The determination module 403 is configured to determine whether the access behavior of the terminal is a malicious access according to an evaluation result.

In an embodiment, the time sliding window includes $m$ equal time slices; as shown in Fig. 5, the evaluation module 402 includes: a time slice submodule 4021 and a first ratio submodule 4028.

The time slice submodule 4021 is configured to judge whether a number of times of accesses for each time slice is beyond a preset threshold value of number of times for slicing, and acquire $n$ time slices in which the number of times of accesses is beyond the preset threshold value of number of times for slicing.

The first ratio submodule 4028 is configured to judge whether the ratio of $n$ to $m$ is beyond a preset first ratio threshold value.

The determination module 403 determines the access behavior of the terminal as a malicious access if the ratio of $n$ to $m$ is beyond the preset first ratio threshold value.

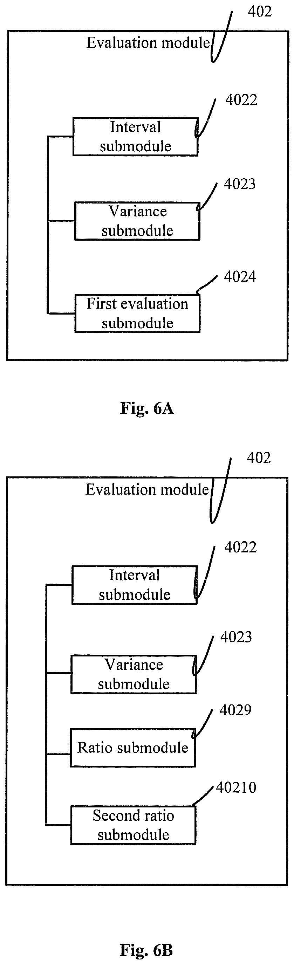

In an embodiment, as shown in Fig. 6A, the evaluation module 402 includes: an interval submodule 4022, a variance submodule 4023 and a first evaluation submodule 4024.

The interval submodule 4022 is configured to acquire a time interval between two adjacent access behaviors for every two adjacent access behaviors within the time sliding window.

The variance submodule 4023 is configured to calculate a time variance of access behaviors according to time intervals acquired.

The first evaluation submodule 4024 is configured to judge whether the time variance is greater than a preset variance threshold value.

The determination module 403 determines the access behavior of the terminal as a malicious access if the time variance is greater than a preset variance threshold value.

In an embodiment, the time slice submodule 4021 may also include: an interval submodule 4022, a variance submodule 4023 and a first evaluation submodule 4024.

In an embodiment, as shown in Fig. 6B, the evaluation module 402 includes: an interval submodule 4022, a variance submodule 4023, a ratio submodule 4029 and a second ratio submodule 40210.

The interval submodule 4022 is configured to acquire a time interval between two adjacent access behaviors for every two adjacent access behaviors within the time sliding window.

The variance submodule 4023 is configured to calculate a time variance of access behaviors according to time intervals acquired.

The ratio submodule 4029 is configured to calculate a ratio of the time variance to an average value of the time intervals.

The second ratio submodule 40210 is configured to judge whether the ratio is smaller than a preset second ratio threshold value.

The determination module 403 determines the access behavior of the terminal as a malicious access if the ratio is smaller than the preset second ratio threshold value.

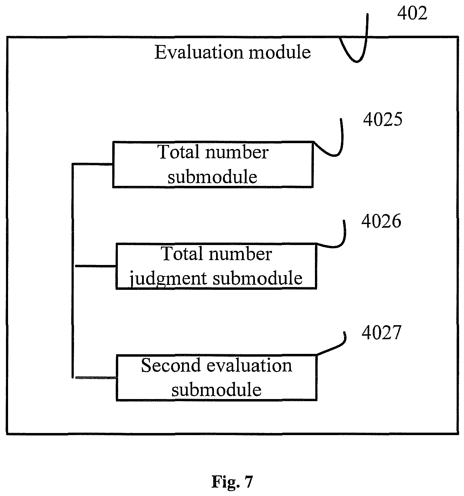

In an embodiment, as shown in Fig. 7, the evaluation module 402 includes: a total number submodule 4025, a total number judgment submodule 4026 and a second evaluation submodule 4027.

The total number submodule 4025 is configured to acquire a total number of access behaviors within the time sliding window.

The total number judgment submodule 4026 is configured to judge whether the total number is beyond a preset total number threshold value.

The second evaluation submodule 4027 is configured to evaluate the access behavior within the time sliding window according to a judgment result.

With regard to the device in the above embodiment, detailed description of specific modes for performing operation of modules has been made in the embodiment related to the method, thus no detailed illustration will be made herein.

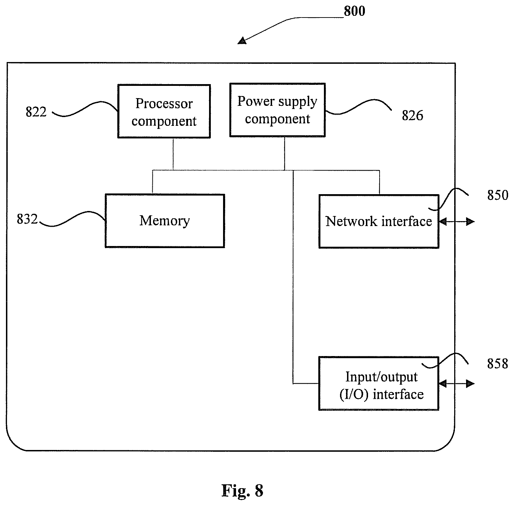

Fig. 8 is a block diagram of a server 800 for identifying user behavior according to an exemplary embodiment. For example, the server 800 can be provided as a computer. Referring to Fig. 8, the server 800 includes a processor component 822, and further includes one or more processors, and memory resource represented by the memory 832 configured to store instructions such as an application program executable by the processor component 822. The application program stored in the memory 832 may include one or more modules each of which is corresponding to a set of instructions. In addition, the processor component 822 is configured to execute instructions so as to execute the foregoing method for identifying user behavior.

The server 800 may also include a power supply component 826 configured to execute the power management of the server 800, a wired or wireless network interface 850 configured to connect the server 800 to the network, and an input/output (I/O) interface 858. The server 800 can operate an operating system based on and stored in the memory 832, for example, Windows Server™, Mac OS X™, Unix™, Linux™, FreeBSD™ or other similar operating systems.

A device for identifying user behavior includes:

a processor; and
a memory configured to store instruction executable by the processor;
wherein, the processor is configured to:

acquire an access behavior of a terminal within a preset time sliding window;
evaluate an access behavior within the time sliding window according to the access behavior within the time sliding window; and
determine whether the access behavior of the terminal is a malicious access according to an evaluation result.

The processor also can be configured to:

the time sliding window includes $m$ equal time slices;
the step of evaluating the access behavior within the time sliding window according to the access behavior within the time sliding window includes:

judging whether a number of times of accesses for each time slice is beyond a preset threshold value of number of times for slicing, and acquiring $n$ time slices in which the number of times of accesses is beyond the preset threshold value of number of times for slicing;
judging whether a ratio of $n$ to $m$ is beyond a preset first ratio threshold value; and
the step of determining whether the access behavior of the terminal is a malicious access according to an evaluation result includes:
determining the access behavior of the terminal as a malicious access if the ratio of $n$ to $m$ is beyond the preset first ratio threshold value.

The processor also can be configured to:
the step of evaluating the access behavior within the time sliding window according to the access behavior within the time sliding window includes:

acquiring a time interval between two adjacent access behaviors for every two adjacent access behaviors within the time sliding window;
calculating a time variance of access behaviors according to time intervals acquired;
judging whether the time variance is greater than a preset variance threshold value; and
the step of determining whether the access behavior of the terminal is a malicious access according to an evaluation result includes:

determining the access behavior of the terminal as a malicious access if the time variance is greater than the preset variance threshold value.

The processor also can be configured to:

the step of evaluating the access behavior within the time sliding window according to the access behavior within the time sliding window includes:

acquiring a time interval between two adjacent access behaviors for every two adjacent access behaviors within the time sliding window;
calculating a time variance of access behaviors according to time intervals acquired;
calculating a ratio of the time variance to an average value of the time intervals; and
judging whether the ratio is smaller than a preset second ratio threshold value;

the step of determining whether the access behavior of the terminal is a malicious access according to an evaluation result includes:
determining the access behavior of the terminal as a malicious access if the ratio is smaller than the preset second ratio threshold value.

The processor also can be configured to:
the step of evaluating the access behavior within the time sliding window according to the access behavior within the time sliding window includes:

acquiring a total number of access behaviors within the time sliding window;
judging whether the total number is beyond a preset total number threshold value; and
evaluating the access behavior within the time sliding window according to a judgment result.

A non-transitory computer-readable storage medium, wherein instructions in the storage medium are executed by a processor of a mobile terminal so that the mobile terminal may execute a method for identifying user behavior, and the method includes:

acquiring an access behavior of a terminal within a preset time sliding window;
evaluating the access behavior within the time sliding window according to the access behavior within the time sliding window; and
determining whether the access behavior of the terminal is a malicious access according to an evaluation result.

Instructions in the storage media may also include:

the time sliding window includes $m$ equal time slices;

the step of evaluating the access behavior within the time sliding window according to the access behavior within the time sliding window includes:

> judging whether a number of times of accesses for each time slice is beyond a preset threshold value of number of times for slicing, and acquiring *n* time slices in which the number of times of accesses is beyond the preset threshold value of number of times for slicing;
> judging whether a ratio of *n* to *m* is beyond a preset first ratio threshold value; and
> the step of determining whether the access behavior of the terminal is a malicious access according to an evaluation result includes:
> determining the access behavior of the terminal as a malicious access if the ratio of *n* to *m* is beyond the preset first ratio threshold value.

Instructions in the storage media may also include:

> the step of evaluating the access behavior within the time sliding window according to the access behavior within the time sliding window includes:
> acquiring a time interval between two adjacent access behaviors for every two adjacent access behaviors within the time sliding window;
> calculating a time variance of access behaviors according to time intervals acquired;
> judging whether the time variance is greater than a preset variance threshold value; and
> the step of determining whether the access behavior of the terminal is a malicious access according to an evaluation result includes:
> determining the access behavior of the terminal as a malicious access if the time variance is greater than the preset variance threshold value.

Instructions in the storage media may also include:

> the step of evaluating the access behavior within the time sliding window according to the access behavior within the time sliding window includes:
> acquiring a time interval between two adjacent access behaviors for every two adjacent access behaviors within the time sliding window;
> calculating a time variance of access behaviors according to time intervals acquired;
> calculating a ratio of the time variance to an average value of the time intervals; and
> judging whether the ratio is smaller than a preset second ratio threshold value;
> the step of determining whether the access behavior of the terminal is a malicious access according to an evaluation result includes:
> determining the access behavior of the terminal as a malicious access if the ratio is smaller than the preset second ratio threshold value.

Instructions in the storage media may also include:
the step of evaluating the access behavior within the time sliding window according to the access behavior within the time sliding window includes:

> acquiring a total number of access behaviors within the time sliding window;
> judging whether the total number is beyond a preset total number threshold value; and
> evaluating the access behavior within the time sliding window according to a judgment result.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

**Claims**

1. A method for identifying user behavior, comprising:

> acquiring (101, 201, 301) an access behavior of a terminal within a preset time sliding window;
> evaluating (102) the access behavior within the time sliding window; and
> determining (103) whether the access behavior of the terminal is malicious according to an evaluation result,
> **characterized in that** the time sliding window comprises *m* equal time slices; and
> the evaluating the access behavior within the time sliding window comprises:

>> judging whether a number of times of accesses for each time slice is beyond a preset threshold value of number of times for slicing, and acquiring *n* time slices in which the number of times of accesses is beyond the preset threshold value of number of times for slicing; and
judging whether a ratio of *n* to *m* is beyond
a preset first ratio threshold value;

the determining whether the access behavior of
the terminal is malicious according to an evaluation result comprises:
determining the access behavior of the terminal
as malicious if the ratio of *n* to *m* is beyond the
preset first ratio threshold value.

2. A device for identifying user behavior, comprising:

an acquisition module (401), configured to acquire an access behavior of a terminal within a
preset time sliding window;
an evaluation module (402), configured to evaluate the access behavior within the time sliding
window; and
a determination module (403), configured to determine whether the access behavior of the terminal is malicious according to an evaluation result
**characterized in that** the time sliding window
comprises *m* equal time slices; and
the evaluation module comprises:

a time slice submodule (4021), configured
to judge whether a number of times of accesses for each time slice is beyond a preset threshold value of number of times for
slicing, and acquiring *n* time slices in which
the number of times of accesses is beyond
the preset threshold value of number of
times for slicing; and
a first ratio submodule (4028), configured
to judge whether a ratio of *n* to *m* is beyond
a preset first ratio threshold value;

the determination module determines the access behavior of the terminal as malicious if the
ratio of *n* to *m* is beyond the preset first ratio
threshold value.

3. A server for identifying user behavior, comprising:

a processor; and
a memory configured to store instruction executable by the processor;
wherein, the processor is configured to perform
a method according to claim 1.

4. A computer program, which when executing on a
processor, performs a method according to claim 1.

5. A recording medium readable by a computer and
having recorded thereon a computer program including instructions for executing the steps of a method according to claim 1.

**Patentansprüche**

1. Verfahren zur Identifikation von Benutzerverhalten,
umfassend:

Erfassen (101, 201, 301) eines Zugriffsverhaltens eines Endgeräts innerhalb eines voreingestellten gleitenden Zeitfensters,
Bewerten (102) des Zugriffsverhaltens innerhalb des gleitenden Zeitfensters, und
Bestimmen (103), ob das Zugriffsverhalten des
Endgeräts gemäß einem Bewertungsergebnis
schädlich ist,
**dadurch gekennzeichnet, dass** das gleitende
Zeitfenster *m* gleiche Zeitscheiben umfasst, und
das Bewerten des Zugriffsverhaltens innerhalb
des gleitenden Zeitfensters umfasst:

Beurteilen, ob eine Anzahl von Zugriffen für
jede Zeitscheibe jenseits eines voreingestellten Schwellenwerts einer Anzahl von
Malen für die Scheibeneinteilung liegt, und
Erfassen von *n* Zeitscheiben, in denen die
Anzahl von Zugriffen jenseits des voreingestellten Schwellenwerts der Anzahl von Malen für die Scheibeneinteilung liegt, und
Beurteilen, ob ein Verhältnis von *n* zu *m* jenseits eines voreingestellten ersten Verhältnisschwellenwerts liegt,

wobei das Bestimmen, ob das Zugriffsverhalten
des Endgeräts gemäß einem Bewertungsergebnis schädlich ist, umfasst:
Bestimmen des Zugriffsverhaltens des Endgeräts als schädlich, wenn das Verhältnis von *n* zu
*m* jenseits des voreingestellten ersten Verhältnisschwellenwerts liegt.

2. Vorrichtung zur Identifizierung von Benutzerverhalten, umfassend:

ein Erfassungsmodul (401), das konfiguriert ist,
ein Zugriffsverhalten eines Endgeräts innerhalb
eines voreingestellten gleitenden Zeitfensters
zu erfassen,
ein Bewertungsmodul (402), das konfiguriert ist,
das Zugriffsverhalten innerhalb des gleitenden
Zeitfensters zu bewerten, und
ein Bestimmungsmodul (403), das konfiguriert
ist, zu bestimmen, ob das Zugriffsverhalten des
Endgeräts gemäß einem Bewertungsergebnis
schädlich ist,
**dadurch gekennzeichnet, dass** gleitenden
Zeitfenster *m* gleiche Zeitscheiben umfasst, und
das Bewertungsmodul umfasst:

ein Zeitscheiben-Untermodul (4021), das konfiguriert ist, zu beurteilen, ob eine Anzahl von Zugriffen für jede Zeitscheibe jenseits eines voreingestellten Schwellenwerts für die Anzahl von Malen für die Scheibeneinteilung liegt, und Erfassen von *n* Zeitscheiben, in denen die Anzahl von Malen der Zugriffe jenseits des voreingestellten Schwellenwerts der Anzahl von Malen für die Scheibeneinteilung liegt, und

ein erstes Verhältnis-Untermodul (4028), das konfiguriert ist, zu beurteilen, ob ein Verhältnis von *n* zu *m* jenseits eines voreingestellten ersten Verhältnisschwellenwerts liegt,

wobei das Bestimmungsmodul das Zugriffsverhalten des Endgeräts als schädlich bestimmt, wenn das Verhältnis von *n* zu *m* jenseits des voreingestellten ersten Verhältnisschwellenwerts liegt.

3. Server zur Identifizierung von Benutzerverhalten, umfassend:

einen Prozessor, und
einen Speicher, der konfiguriert ist, durch den Prozessor ausführbare Anweisungen zu speichern,
wobei der Prozessor konfiguriert ist, ein Verfahren nach Anspruch 1 durchzuführen.

4. Computerprogramm, das bei Ausführung auf einem Prozessor ein Verfahren nach Anspruch 1 durchführt.

5. Aufzeichnungsmedium, das von einem Computer lesbar ist, und auf dem ein Computerprogramm aufgezeichnet ist, das Anweisungen zur Ausführung der Schritte eines Verfahrens nach Anspruch 1 aufweist.

**Revendications**

1. Procédé pour identifier un comportement d'utilisateur, comprenant :

l'acquisition (101, 201, 301) d'un comportement d'accès d'un terminal dans une fenêtre glissante temporelle prédéfinie ;
l'évaluation (102) du comportement d'accès dans la fenêtre glissante temporelle ; et
la détermination (103) de si le comportement d'accès du terminal est malveillant en fonction d'un résultat d'évaluation,
**caractérisé en ce que** la fenêtre glissante temporelle comprend *m* tranches de temps égales ;
et

l'évaluation du comportement d'accès dans la fenêtre glissante temporelle comprend :

le jugement de si un nombre de fois d'accès pour chaque tranche de temps est au-delà d'une valeur de seuil prédéfinie de nombre de fois pour le découpage en tranches, et l'acquisition de *n* tranches de temps dans lesquelles le nombre de fois d'accès est au-delà de la valeur de seuil prédéfinie de nombre de fois pour le découpage en tranches ; et
le jugement de si un rapport de *n* sur *m* est au-delà d'une valeur de seuil de premier rapport prédéfinie ;

la détermination de si le comportement d'accès du terminal est malveillant en fonction d'un résultat d'évaluation comprend :
la détermination du comportement d'accès du terminal comme malveillant si le rapport de *n* sur *m* est au-delà de la valeur seuil de premier rapport prédéfinie.

2. Dispositif pour identifier un comportement d'utilisateur, comprenant :

un module d'acquisition (401), configuré pour acquérir un comportement d'accès d'un terminal dans une fenêtre glissante temporelle prédéfinie ;
un module d'évaluation (402), configuré pour évaluer le comportement d'accès dans la fenêtre glissante temporelle ; et
un module de détermination (403), configuré pour déterminer si le comportement d'accès du terminal est malveillant en fonction d'un résultat d'évaluation,
**caractérisé en ce que** la fenêtre glissante temporelle comprend *m* tranches de temps égales ;
et
le module d'évaluation comprend :

un sous-module de tranche de temps (4021), configuré pour déterminer si un nombre de fois d'accès pour chaque tranche de temps est au-delà d'une valeur de seuil prédéfinie de nombre de fois pour le découpage en tranches, et acquérir *n* tranches de temps dans lesquelles le nombre de fois d'accès est au-delà de la valeur de seuil prédéfinie de nombre de fois pour le découpage en tranches ; et
un sous-module de premier rapport (4028), configuré pour juger si un rapport de *n* sur *m* est au-delà d'une valeur de seuil de premier rapport prédéfinie ;

le module de détermination détermine le comportement d'accès du terminal comme malveillant si le rapport de *n* sur *m* est au-delà de la valeur de seuil de premier rapport prédéfinie.

3. Serveur pour identifier un comportement d'utilisateur, comprenant :

   un processeur ; et
   une mémoire configurée pour stocker une instruction exécutable par le processeur ;
   dans lequel, le processeur est configuré pour effectuer un procédé selon la revendication 1.

4. Programme d'ordinateur qui, lors de l'exécution sur un processeur, effectue un procédé selon la revendication 1.

5. Support d'enregistrement lisible par un ordinateur et sur lequel est enregistré un programme d'ordinateur incluant des instructions pour exécuter les étapes d'un procédé selon la revendication 1.

101

Acquiring an access behavior of a terminal within
a preset time sliding window

102

Evaluating the access behavior within the time sliding window
according to the access behavior within the time sliding window

103

Determining whether the access behavior of the terminal is a
malicious access according to an evaluation result

**Fig. 1**

201

Acquiring an access behavior of a terminal
within a preset time sliding window

202

For each time slice in the time sliding window, comparing a
number of times of accesses corresponding to the each time
slice with a preset threshold value of number of times for
slicing

203

Determining a time slice in which the number of times of
accesses is beyond the preset threshold value of number of
times for slicing

204

Calculating a ratio of the number of time slices in which the
number of times of accesses is beyond the threshold value of
number of times for slicing to a total number of time slices

205

Judging whether the ratio acquired by calculation
is beyond a preset first ratio threshold value

N

Y

206

Determining that a malicious access exists

207

Determining that no malicious access exists

**Fig. 2**

301

Acquiring an access behavior of a terminal
within a preset time sliding window

302

Acquiring a time interval between two adjacent access
behaviors for every two adjacent access behaviors within
the time sliding window

303

Calculating an average value of time intervals according
to the time intervals acquired

304

Calculating a time variance of access behaviors according
to the time intervals acquired

305

Calculating a ratio of the time variance to the average
value of the time intervals

306

Judging whether the ratio is smaller than
the preset second ratio threshold value

N

Y

307

Determining that a malicious access exists

308

Determining that no malicious access exists

Fig. 3

Fig. 4

Fig. 5

402

Evaluation module

4022

Interval
submodule

4023

Variance
submodule

4024

First evaluation
submodule

**Fig. 6A**

402

Evaluation module

4022

Interval
submodule

4023

Variance
submodule

4029

Ratio submodule

40210

Second ratio
submodule

**Fig. 6B**

Fig. 7

800

Processor component

822

Power supply component

826

Memory

832

Network interface

850

Input/output (I/O) interface

858

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010192201 A
- CN 104113519
- US 2013291107 A
- US 2014165200 A
- US 2014304833 A